(19) Europäisches Patentamt / European Patent Office / Office européen des brevets

(11) **EP 4 492 497 B1**

(12) **EUROPEAN PATENT SPECIFICATION**

(45) Date of publication and mention
of the grant of the patent:
**15.04.2026 Bulletin 2026/16**

(21) Application number: **22961822.8**

(22) Date of filing: **14.10.2022**

(51) International Patent Classification (IPC):
*H01M 4/58* (2010.01)    *H01M 4/136* (2010.01)
*H01M 4/36* (2006.01)    *H01M 4/38* (2006.01)
*H01M 4/62* (2006.01)    *H01M 10/0525* (2010.01)

(52) Cooperative Patent Classification (CPC):
**H01M 4/136; H01M 4/366; H01M 4/38;
H01M 4/5825; H01M 4/626; H01M 10/0525;
Y02E 60/10**

(86) International application number:
**PCT/CN2022/125524**

(87) International publication number:
**WO 2024/077636 (18.04.2024 Gazette 2024/16)**

(54) **COMPOSITE LITHIUM MANGANESE IRON PHOSPHATE MATERIAL, PREPARATION METHOD THEREFOR, SECONDARY BATTERY AND ELECTRICAL DEVICE**

LITHIUM-MANGAN-EISENPHOSPHAT-VERBUNDMATERIAL, HERSTELLUNGSVERFAHREN DAFÜR, SEKUNDÄRBATTERIE UND ELEKTRISCHE VORRICHTUNG

MATÉRIAU COMPOSITE DE LITHIUM-MANGANÈSE-FER-PHOSPHATE, SON PROCÉDÉ DE PRÉPARATION, BATTERIE SECONDAIRE ET DISPOSITIF ÉLECTRIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**15.01.2025 Bulletin 2025/03**

(73) Proprietor: **Contemporary Amperex Technology (Hong Kong) Limited
Central, Central And Western District (HK)**

(72) Inventors:
• **YANG, Chenglong
Ningde, Fujian 352100 (CN)**

• **ZHANG, Haiming
Ningde, Fujian 352100 (CN)**

(74) Representative: **Lorenz Seidler Gossel Part. mbB
Widenmayerstr. 23
80538 München (DE)**

(56) References cited:
**CN-A- 102 844 915    CN-A- 107 316 974
CN-A- 114 772 572    CN-A- 114 772 572
JP-A- 2001 110 414    JP-A- 2015 185 276
US-A1- 2021 376 375    US-B2- 8 449 980**

## Description

### TECHNICAL FIELD

This application relates to the field of batteries and specifically to a composite lithium manganese iron phosphate material and a preparation method thereof, a secondary battery, and an electric apparatus.

### BACKGROUND

Secondary batteries have characteristics such as high capacity and long service life, and thus are widely used in electronic devices such as mobile phones, laptop computers, electric bicycles, electric vehicles, electric aircrafts, electric ships, electric toy cars, electric toy ships, electric toy aircrafts, and electric tools.

As the application of batteries continues to expand, the requirements for the performance of secondary batteries have become increasingly stringent. To improve the performance of secondary batteries, optimization and improvement of the positive electrode active materials are commonly pursued. However, the current application of positive electrode active materials in secondary batteries often results in poor gram capacity performance of the positive electrode active materials and inferior cycling performance of the secondary batteries. CN 114 772 572 A discloses a preparation method comprising mixing a phosphorus source, an iron source, a lithium source, a doping additive and a carbon source with water, grinding for 1-3 hours, spray-drying to obtain a first precursor, sintering the precursor under a protective atmosphere to yield a $LiFePO_4$/C positive electrode material, uniformly mixing the $LiFePO_4$/C with a carbon source, adding the mixture into a silver nitrate solution, vacuum-drying to obtain a nanometal-ion-coated lithium iron phosphate material, and then uniformly mixing the first and second precursors, spray-drying to obtain a second precursor, and sintering under an inert atmosphere to produce the $LiFePO_4$/C/Ag nanometal-ion-coated lithium iron phosphate material. US 8 449 980 B2 relates to composite particles for an electrode comprising $LiVOPO_4$ particles and a metal, wherein the metal is supported on at least a portion of the surface of the $LiVOPO_4$ particles to form a metal coating layer. US 2021/376375 A1 discloses a lithium-ion battery electrode material comprising an electrode active powder and a metal thin film that partially or fully wraps the powder surface, the metal thin film being formed from silver, gold, platinum, palladium, aluminum, magnesium, zinc, tin, or their alloys.

### SUMMARY

This application has been made in view of the preceding issue and is intended to provide a composite lithium manganese iron phosphate material and a preparation method thereof, a secondary battery, and an electric apparatus.

A first aspect of this application provides a composite lithium manganese iron phosphate material according to claim 1 of the present applicatin. The composite lithium manganese iron phosphate material includes lithium manganese iron phosphate particles and a coating layer. An upper service voltage of the lithium manganese iron phosphate particles is denoted as V1 in V; and the coating layer covers at least partial surface of the lithium manganese iron phosphate particles, the coating layer includes metal nanoparticles, an oxidation voltage of the metal nanoparticles is denoted as V2 in V, and the composite lithium manganese iron phosphate material satisfies V1<V2.

In this way, in this application, the metal nanoparticles cover the surface of the lithium manganese iron phosphate particles such that the electrical conductivity of the coated material can be improved and electrical conductivity resistance of the coated material can be reduced; and the metal nanoparticles have stable properties and are not prone to oxidation under high pressure, thereby guaranteeing the conductive stability of the coated material during its service life, reducing the risk of rapid increase in polarization and rapid attenuation in capacity of the material in a later stage of a cycle, and guaranteeing cycling stability and stable capacity performance of the material. In some embodiments, the lithium manganese iron phosphate particles have a structural formula of $LiMn_{1-x}Fe_xM_yPO_4$, where $0.05 \leq x \leq 0.95$, $0 \leq y \leq 1$, and optionally, $0 \leq y \leq 0.2$; and M denotes a doping element, the lithium manganese iron phosphate particles include a doping element M, and the doping element M includes one or more of elements sulfur, nitrogen, boron, fluorine, chlorine, bromine, and iodine, and optionally, the doping element M includes element sulfur.

In this way, the doping element M of this application can form a bond with the metal nanoparticles during the formation of the metal nanoparticles, which provides an anchoring effect on the metal nanoparticles, and realizes the positional growth and small-size growth of the metal nanoparticles. Therefore, the uniform doping of the doping element M is favorable to the uniform distribution of the metal nanoparticles and improves the coating performance on the lithium manganese iron phosphate particles.

In some embodiments, the metal nanoparticles include nanoparticles of one or more of silver, gold, platinum, palladium, rhodium, iridium, osmium, and ruthenium.

The metal nanoparticles can exist stably under the operating voltage of the lithium manganese iron phosphate, serving to improve the electrical conductivity of the lithium manganese iron phosphate.

In some embodiments, based on a total mass of the composite lithium manganese iron phosphate material, a mass percentage of the coating layer is denoted as A%, where $0.3 \leq A \leq 10$, and optionally, $0.3 \leq A \leq 3$.

In this way, with the mass percentage of the coating layer of this application being within the foregoing range, the coating layer is not too thick, which is conductive to the smooth migration of lithium ions and ensures the normal progress of the cycling process; the coating layer does not excessively occupy the space of the lithium manganese iron phosphate, which guarantees the gram capacity of the composite lithium manganese iron phosphate; and the coating layer is not too thin, which can provide a good coating effect on the surface of the lithium manganese iron phosphate particles and improve the overall electrical conductivity of the coated lithium manganese iron phosphate particles.

In some embodiments, thickness of the coating layer is denoted as H in nm, where $2 \leq H \leq 100$, and optionally, $5 \leq H \leq 20$.

In this way, with the thickness of the coating layer of this application being within the foregoing range, the coating layer is not too thick, which is conductive to the smooth migration of lithium ions and ensures the normal progress of the cycling process; and the coating layer is not too thin, which can provide a good coating effect on the surface of the lithium manganese iron phosphate particles and improve the overall electrical conductivity of the coated lithium manganese iron phosphate particles.

In some embodiments, the composite lithium manganese iron phosphate material satisfies that an average particle size D of the metal nanoparticles is denoted as D1 in nm, where $D1 \leq 20$, and optionally, $D1 \leq 10$.

In this way, with the average particle size D of the metal nanoparticles of this application being within the foregoing range, the average particle size of the metal nanoparticles is not too large, and the metal nanoparticles can tightly cover the lithium manganese iron phosphate particles, so as to improve the overall electrical conductivity of the lithium manganese iron phosphate particles in a uniform manner and reduce a coating amount; and the average particle size D of the metal nanoparticles is not too small such that the metal nanoparticles has certain gaps, which is conducive to the migration of lithium ions and ensures the smooth progress of the cycling process.

In some embodiments, the composite lithium manganese iron phosphate material satisfies that a median particle size by volume $D_v50$ of the lithium manganese iron phosphate particles is denoted as D2 in $\mu$m, where $0.1 \leq D2 \leq 10$, and optionally, $0.2 \leq D2 \leq 5$.

In this way, the lithium manganese iron phosphate particles of this application have a relatively stable structure and relatively good kinetic performance, which is conducive to improving the initial coulombic efficiency of the composite lithium manganese iron phosphate particles and is conducive to the formation of uniform coating of the metal nanoparticles on the surface of the lithium manganese iron phosphate particles.

In some embodiments, the composite lithium manganese iron phosphate material satisfies that a median particle size by volume $D_v50$ of the composite lithium manganese iron phosphate material is denoted as D in $\mu$m, where $0.1 \leq D \leq 10$, and optionally, $0.2 \leq D \leq 5$.

In this way, with the composite lithium manganese iron phosphate material of this application within the foregoing range, the composite lithium manganese iron phosphate material has a relatively stable structure and relatively good kinetic performance, which is conducive to improving the initial coulombic efficiency of the composite lithium manganese iron phosphate material.

A second aspect of this application provides a preparation method of composite lithium manganese iron phosphate material, where the method includes: providing lithium manganese iron phosphate particles; and providing a conductive precursor to the lithium manganese iron phosphate particles, and performing heat treatment on the conductive precursor to reduce the conductive precursor to form a coating layer covering the lithium manganese iron phosphate particles, where the coating layer includes metal nanoparticles; where an upper service voltage of the lithium manganese iron phosphate particles is denoted as V1 in V; and the coating layer covers at least partial surface of the lithium manganese iron phosphate particles, the coating layer includes metal nanoparticles, an oxidation voltage of the metal nanoparticles is denoted as V2 in V, and the composite lithium manganese iron phosphate material satisfies V1<V2.

In some embodiments, the step of providing lithium manganese iron phosphate particles includes doping a doping element M into the lithium manganese iron phosphate particles, where the doping element M includes one or more of elements sulfur, nitrogen, boron, fluorine, chlorine, bromine, and iodine, and optionally, the doping element M includes element sulfur.

In some embodiments, the heat treatment is performed at a temperature of 400°C to 1000°C; and/or the heat treatment is performed for 2h to 6h.

In this way, in this application, the conditions of the heat treatment are regulated such that the size of the metal nanoparticles formed can be controlled; the temperature of the heat treatment being not too high is conducive to the moderate growth of the metal nanoparticles, such that the metal nanoparticles are not too large and the doping element is prone to provide an anchoring effect, so as to cause the metal nanoparticles to be uniformly distributed on the surface of the lithium manganese iron phosphate particles; and the particles formed have a relatively moderate particle size, which is beneficial to forming a good coating effect on the lithium manganese iron phosphate particles.

In some embodiments, the conductive precursor includes one or more of nitrate radical, chloride ions, bromide ions, iodide ions, sulfate radical, phosphate radical, acetate radical, and acetyl acetone radical; and/or the conductive precursor includes one or more of silver ions, gold ions, platinum ions, palladium ions, rhodium ions, iridium ions, osmium ions, and ruthenium ions.

In some embodiments, based on a total molar ratio of the conductive precursor to the lithium manganese iron phosphate particles, a molar percentage of the conductive precursor is b%, where $0.25 \leq b \leq 14.5$, and optionally, $0.40 \leq b \leq 4.60$.

In this way, in this application, the molar percentage of the conductive precursor is regulated such that the quality of the coating layer formed by the conductive precursor on the surface of the lithium manganese iron phosphate particles is regulated; the lithium manganese iron phosphate is the major material in the composite lithium manganese iron phosphate, and thus the coating layer has less effect on the overall gram capacity of the material, which guarantees the overall gram capacity of the material; and the coating layer can form a uniform coating on the lithium manganese iron phosphate, which improves the overall electrical conductivity of the composite manganese iron phosphate and is conducive to the capacity performance of the lithium manganese iron phosphate.

A third aspect of this application provides a secondary battery including a positive electrode plate, where the positive electrode plate includes the composite lithium manganese iron phosphate material according to any one of the embodiments of the first aspect of this application or a composite lithium manganese iron phosphate material obtained using the method according to any one of the embodiments of the second aspect of this application.

A fourth aspect of this application further provides an electric apparatus including the secondary battery according to the third aspect of this application.

BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.

FIG. 1 is a schematic diagram of an embodiment of a secondary battery in this application.
FIG. 2 is a schematic exploded view of the embodiment of the secondary battery in FIG. 1.
FIG. 3 is a schematic diagram of an embodiment of a battery module in this application.
FIG. 4 is a schematic diagram of an embodiment of a battery pack in this application.
FIG. 5 is an exploded schematic view of the embodiment of the battery pack shown in FIG. 4.
FIG. 6 is a schematic diagram of an embodiment of an electric apparatus including the secondary battery in this application as a power source.
FIG. 7 is a diagram of cycling curves of Example 1 and Comparative Example 1.

The figures are not necessarily drawn to scale.

Reference signs:

1. battery pack; 2. upper box body; 3. lower box body; 4. battery module;
5. secondary battery; 51. housing; 52. electrode assembly;
53. cover plate; and
6. electric apparatus.

**DESCRIPTION OF EMBODIMENTS**

The following specifically describes embodiments of the composite lithium manganese iron phosphate material and preparation method thereof, secondary battery, and electric apparatus disclosed in this application in detail. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions. Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the above-mentioned method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In this application, the term "a plurality of" means two or more than two and the term "a plurality of types" means two types or more than two types.

The lithium manganese iron phosphate has an olivine structure and its theoretical capacity is equivalent to that of the lithium iron phosphate material. Due to the presence of element Mn, the lithium manganese iron phosphate electrode has a relatively high potential. The high potential makes this type of material have the potential advantage of high energy density. However, in addition, the lithium manganese iron phosphate crystals have a hexagonal dense-stacked structure, with the lithium and iron atoms occupying the octahedral 4a and 4c sites respectively and the phosphorus atoms occupying the tetrahedral 4c sites, where the $FeO_6(MnO_6)$ octahedra and $PO_4$ tetrahedra are cross-connected. Such structure has better stability, such that even if all the lithium ions are deintercalated during the charge, the structure is not prone to collapse. In addition, the P atoms in the material form $PO_4$ tetrahedra through P-O strong covalent bonds, while the O atoms are hard to deintercalate from the structure, so the material has high stability. However, because the material is connected through the $PO_4$ tetrahedra, the $PO_4$ tetrahedra do not have a continuous $FeO_6(MnO_6)$ co-prismatic octahedron network, resulting in poorer electrical conductivity of the material. Lower conductivity leads to lower diffusion coefficient of lithium ions and more difficult to synthesize lithium manganese iron phosphate capable of reversible charge and discharge. The electrical conductivity of the material limits the development of the material.

The inventors have found that at present, to improve the electrical conductivity of the lithium manganese iron phosphate, a conductive carbon layer usually covers the surface of the lithium manganese iron phosphate particles. However, the inventors have found through in-depth study that because a voltage system suitable for the lithium manganese iron phosphate is high voltage, for example, greater than 4 V, the oxidation of the carbon layer is enhanced under the high-voltage system, which may cause the carbon layer to oxidize and produce gas. After long-term use, the electrical conductivity of the material is lowered, impedance of the material increases, and the cycling performance of the material decays.

In view of this, the inventors have improved the coating structure of the lithium manganese iron phosphate. A coating layer containing metal nanoparticles covers the surface of the lithium manganese iron phosphate particles. The coating layer can improve the electrical conductivity of the lithium manganese iron phosphate, which is conducive to the capacity performance of the lithium manganese iron phosphate, and the coating layer has stable performance, which improves the overall structural stability of the lithium manganese iron phosphate and is conducive to the improvement of the cycling performance of the secondary batteries to which it is applied. This application is hereinafter described in detail.

## Composite lithium manganese iron phosphate material

According to a first aspect, this application proposes a composite lithium manganese iron phosphate material.

The composite lithium manganese iron phosphate material includes lithium manganese iron phosphate particles and a coating layer. An upper service voltage of the lithium manganese iron phosphate particles is denoted as V1 in V; and the coating layer covers at least partial surface of the lithium manganese iron phosphate particles, the coating layer includes metal nanoparticles, an oxidation voltage of the metal nanoparticles is denoted as V2 in V, and the composite lithium manganese iron phosphate material satisfies V1<V2.

The upper service voltage V1 of the lithium manganese iron phosphate is an upper limit charge voltage of the lithium manganese iron phosphate when the lithium manganese iron phosphate is applied as a positive electrode active material to the secondary battery, and under this voltage, the lithium manganese iron phosphate can basically guarantee the stability of the material. For example, the upper service voltage V1 of the lithium manganese iron phosphate may be set from 3.7 V to 4.5 V. V1 may be set by the producer.

The oxidation voltage V2 of the metal nanoparticles is a voltage at which the metal nanoparticles lose their electrons and become metal ions. V2 can be tested by linear scanning voltammetry LSV. In the test, the metal to be measured is used as the working electrode and the lithium wafer is used as the reference electrode, and the voltage is swept from 0 V to 5 V or higher at a scanning speed of 0.15 mV/s to 50 mV/s. The voltage at which the current increases significantly is V2. Optionally, the scanning speed is 1 mV/s to 5 mV/s.

In this application, setting V1<V2 can make the metal nanoparticles basically not oxidized during the long-term cyclic charge and discharge of the secondary battery, and guarantee the structural stability of the composite lithium manganese iron phosphate material.

The lithium manganese iron phosphate particles have the structural formula of $LiMn_{1-x}Fe_xM_yPO_4$, where $0.05 \leq x \leq 0.95$, $0 \leq y \leq 1$, and optionally, $0 \leq y \leq 0.2$.

M denotes a doping element, in other words, the lithium manganese iron phosphate may be a material modified with a doping element or a material without a doping element. The doping element may be a cationic doping element or an anionic doping element. The lithium manganese iron phosphate may be charged and discharged at a high voltage of about 4.45 V. As the composite lithium manganese iron phosphate satisfies the preceding potential relationship, the metal nanoparticles can exist stably under the working voltage of the lithium manganese iron phosphate and are not easily oxidized, thereby providing a long-term and stable coating effect on the lithium manganese iron phosphate particles, improving the structural stability of the coated lithium manganese iron phosphate, and improving the cycling performance of the composite lithium manganese iron phosphate material.

The lithium manganese iron phosphate particles usually have a small particle size, while the particles in the coating layer in the related art have a relatively large particle size. Therefore, the coating layer is not prone to form a coating on the surface of the lithium manganese iron phosphate particles, which results in the inability of providing a good coating effect on the lithium manganese iron phosphate. The coating layer of this application includes metal nanoparticles, and the metal particles in the coating layer has a small particle size in nanometer scale and can be dispersed on the surface of the lithium manganese iron phosphate particles to form uniform coating, so as to provide better overall coating performance on the lithium manganese iron phosphate particles. Due to the small particle size of the metal nanoparticles, the contact between the neighboring metal nanoparticles is more compact, and the metal nanoparticles can fill the voids of the neighboring layers inside the coating layer, such that the coating layer composed of the metal nanoparticles has better electrical conductivity, can reduce the conductive resistance to a certain extent, and is conducive to improving the electrical conductivity of the coated lithium manganese iron phosphate particles, and the improvement of the electrical conductivity is in turn conducive to the performance of the capacity of the lithium manganese iron phosphate particles.

In this application, the metal nanoparticles cover the surface of the lithium manganese iron phosphate particles such that the electrical conductivity of the coated material can be improved and electrical conductivity resistance of the coated material can be reduced; and the metal nanoparticles have stable properties and are not prone to oxidation under high pressure, thereby guaranteeing the conductive stability of the coated material during its service life, reducing the risk of rapid increase in polarization and rapid attenuation in capacity of the material in a later stage of a cycle, and guaranteeing cycling stability and stable capacity performance of the material.

To further improve the coating effect of the coating layer and improve the electrical conductivity of the composite lithium manganese iron phosphate material, in some embodiments, the lithium manganese iron phosphate particles include a doping element M, where the doping element M includes one or more of elements sulfur, nitrogen, boron, fluorine, chlorine, bromine, iodine, and the like, and optionally, the doping element M includes element sulfur.

The doping element M dopes in the form of anion, which can occupy the oxygen vacancies of the lithium manganese iron phosphate particles during charge and discharge and stabilize the structure of the lithium manganese iron phosphate; and the doping element M can increase the electron density of the lithium manganese iron phosphate particles, increase the electrical conductivity and the lithium tolerance performance of the lithium manganese iron phosphate, improve the overall electrical conductivity of the composite lithium manganese iron phosphate material, and improve the capacity performance and the cycling performance.

The doping element M of this application can form a bond with the metal nanoparticles during the formation of the metal nanoparticles, which provides an anchoring effect on the metal nanoparticles, and realizes the positional growth and small-size growth of the metal nanoparticles. Therefore, the uniform doping of the doping element M is favorable to the uniform distribution of the metal nanoparticles and improves the coating performance on the lithium manganese iron phosphate particles.

In some embodiments, the metal nanoparticles include nanoparticles of one or more of silver, gold, platinum, palladium, rhodium, iridium, osmium, ruthenium, mercury, and thallium. The metal nanoparticles can exist stably under the operating voltage of the lithium manganese iron phosphate, serving to improve the electrical conductivity of the lithium manganese iron phosphate. Optionally, the metal nanoparticles include nanoparticles of one or more of silver, gold, platinum, palladium, rhodium, iridium, osmium, and ruthenium. This type of metals is less toxic and more suitable for battery systems.

In some embodiments, based on a total mass of the composite lithium manganese iron phosphate material, a mass percentage of the coating layer is denoted as A%, where $0.3 \leq A \leq 10$, and optionally, $0.3 \leq A \leq 3$.

In this application, the mass percentage of the coating layer has the meaning well known in the art, and can be measured by methods or equipment known in the art. Specifically, a certain weight of the composite lithium manganese iron phosphate material is taken and then dissolved in aqua regia; the solution is diluted; the weight of the coating metal in the diluted solution is tested by ICP; and the mass percentage of the coating layer is calculated based on the weight of the tested metal and according to the weight of the composite lithium manganese iron phosphate material taken.

With the mass percentage of the coating layer of this application being within the foregoing range, the coating layer is not too thick, which is conductive to the smooth migration of lithium ions and ensures the normal progress of the cycling process; the coating layer does not excessively occupy the space of the lithium manganese iron phosphate, which guarantees the gram capacity of the composite lithium manganese iron phosphate; and the coating layer is not too thin, which can provide a good coating effect on the surface of the lithium manganese iron phosphate particles and improve the overall electrical conductivity of the coated lithium manganese iron phosphate particles. For example, the mass percentage A% of the coating layer may be 0.3%, 0.5%, 0.8%, 1.0%, 1.5%, 2.0%, 2.5%, 3.0%, 3.5%, 4.0%, 5.0%, 6.0%, 7.0%, 8.0%, 9.0%, or 10%; or in a range defined by any two of these values.

In some embodiments, thickness of the coating layer is denoted as H in nm, where $2 \leq H \leq 100$, and optionally, $5 \leq H \leq 20$.

In this application, the thickness of the coating layer has the meaning well known in the art, and can be measured by methods or equipment known in the art. Specifically, a certain amount of the composite lithium manganese iron phosphate material may be taken as a sample, and analyzed and tested by a high-resolution transmission electron microscope, so as to obtain an HRTEM image, then thicknesses at a plurality of (for example, more than 30) different positions on the HRTEM image can be measured, and an average value of these thicknesses is taken as the average thicknesses of the coating layer. From the HRTEM image, it can be seen that there are obvious crystal boundaries between the coating layer and the lithium manganese iron phosphate particles.

With the thickness of the coating layer of this application being within the foregoing range, the coating layer is not too thick, which is conductive to the smooth migration of lithium ions and ensures the normal progress of the cycling process; and the coating layer is not too thin, which can provide a good coating effect on the surface of the lithium manganese iron phosphate particles and improve the overall electrical conductivity of the coated lithium manganese iron phosphate particles.

For example, the thickness H in nm of the coating layer may be 2 nm, 3 nm, 5 nm, 10 nm, 20 nm, 30 nm, 50 nm, 60 nm, 80 nm, or 100 nm; or in a range defined by any two of these values.

In some embodiments, an average particle size D of the metal nanoparticles is denoted as D1 in nm, where $D1 \leq 20$, and optionally, $D1 \leq 10$;

In this application, the average particle size D of the metal nanoparticles has the meaning known in the art, and can be measured by methods or equipment well known in the art. The metal of the coating layer is in the form of particles, so a certain amount of the composite lithium manganese iron phosphate material may be taken as a sample, and analyzed and tested by a high-resolution transmission electron microscope, so as to obtain an HRTEM image, then particle sizes of the metal nanoparticles at a plurality of (for example, more than 30) different positions on the HRTEM image can be measured, and an average value of these particle sizes is taken as the average particle size D of the metal nanoparticles.

With the average particle size D of the metal nanoparticles of this application being within the foregoing range, the average particle size of the metal nanoparticles is not too large, and the metal nanoparticles can tightly cover the lithium manganese iron phosphate particles, so as to improve the overall electrical conductivity of the lithium manganese iron phosphate particles in a uniform manner and reduce a coating amount; and the average particle size D of the metal nanoparticles is not too small such that the metal nanoparticles has certain gaps, which is conducive to the migration of lithium ions and ensures the smooth progress of the cycling process. For example, the average particle size of the metal nanoparticles may be 2 nm, 3 nm, 5 nm, 6 nm, 8 nm, 10 nm, 12 nm, 15 nm, 18 nm, or 20 nm; or in a range defined by any two of these values.

In some embodiments, a median particle size by volume $D_v50$ of the lithium manganese iron phosphate particles is denoted as D2 in $\mu$m, where $0.1 \leq D2 \leq 10$, and optionally, $0.2 \leq D2 \leq 5$.

In this application, the median particle size by volume $D_v50$ of the material has the meaning well known in the art, which indicates the particle size corresponding to the time when the cumulative volume distribution percentage of the material reaches 50%, and can be tested by instruments and methods well known in the art. For example, $D_v50$ can be easily measured in accordance with a particle size distribution laser diffraction method in GB/T19077-2016 by using a laser particle size analyzer, for example, a laser particle size analyzer of Mastersizer 2000E from Malvern Instruments Ltd. of UK.

With the lithium manganese iron phosphate particles satisfying the foregoing ranges, both the first particles and the second particles may exist in the lithium manganese iron phosphate particles, and certainly only one of them may exist. The lithium manganese iron phosphate particles have a relatively stable structure and relatively good kinetic performance, which is conducive to improving the initial coulombic efficiency of the composite lithium manganese iron phosphate particles and is conducive to the formation of uniform coating of the metal nanoparticles on the surface of the lithium manganese iron phosphate particles.

In some embodiments, a median particle size by volume $D_v50$ of the composite lithium manganese iron phosphate material is denoted as D in $\mu m$, where $0.1 \leq D \leq 10$, and optionally, $0.2 \leq D \leq 5$.

The thickness of the coating layer and the particle size of lithium manganese iron phosphate differ in orders of magnitude. The thickness of the coating layer contributes little to the particle size of the composite lithium manganese iron phosphate, so the difference in the particle size of the lithium manganese iron phosphate particles and the particle size of the composite lithium manganese iron phosphate particles is not obvious at the micron level. With the composite lithium manganese iron phosphate material of this application satisfying the foregoing ranges, the composite lithium manganese iron phosphate material has a relatively stable structure and relatively good kinetic performance, which is conducive to improving the initial coulombic efficiency of the composite lithium manganese iron phosphate material.

## Preparation method of composite lithium iron phosphate material

According to a second aspect, this application proposes a preparation method of composite lithium manganese iron phosphate material, where the method can be used for preparing the composite lithium manganese iron phosphate material according to any one of the embodiments of the first aspect of this application.

The method includes the following steps.

Step S100: Provide lithium manganese iron phosphate particles.

Step S200: Provide a conductive precursor to the lithium manganese iron phosphate particles, and perform heat treatment on the conductive precursor to reduce the conductive precursor to form a coating layer covering the lithium manganese iron phosphate particles, where the coating layer includes metal nanoparticles.

The metal nanoparticles cover the surface of the lithium manganese iron phosphate particles such that the electrical conductivity of the coated material can be improved and electrical conductivity resistance of the coated material can be reduced; and the metal nanoparticles have stable properties and are not prone to oxidation under high pressure, thereby guaranteeing the electrical conductivity of the coated material during its service life, reducing the risk of rapid increase in polarization and rapid attenuation in capacity of the material in a later stage of a cycle, and guaranteeing cycling stability and stable capacity performance of the material.

In particular, the electrical conductivity and cycling performance of the composite lithium iron phosphate material can be improved when the composite lithium manganese iron phosphate material satisfies the following requirements: an upper service voltage of the lithium manganese iron phosphate particles is denoted as V1 in V; and the coating layer covers at least partial surface of the lithium manganese iron phosphate particles, the coating layer includes metal nanoparticles, an oxidation voltage of the metal nanoparticles is denoted as V2 in V, and the composite lithium manganese iron phosphate material satisfies V1<V2.

In some embodiments, in step S100, the lithium manganese iron phosphate particles may be prepared using a variety of methods, for example, a solid phase method, a co-precipitation method, a sol-gel method, and a hydrothermal/solvent-thermal method, and the solid phase method is hereinafter used as an example for illustration. A lithium source, a manganese source, an iron source, a phosphorus source, and the like are mixed at a set molar ratio, for example, 1:(1-m):m:1, into a solvent to form a slurry; and the slurry is ball-milled and dried, and then sintered at high temperature under a protective gas into a lithium iron phosphate material. $0.05 \leq m \leq 0.95$, and preferably, $0.2 \leq m \leq 0.5$.

The lithium source may include one or more of lithium hydroxide, lithium carbonate, lithium nitrate, lithium dihydrogen phosphate, dilithium hydrogen phosphate, and lithium oxalate.

The manganese source may include manganese carbonate and/or manganese oxalate.

The iron source may include one or more of ferrous carbonate, ferrous acetate, ferrous sulfate, ferric nitrate, ferric phosphate, ferrous acrylate, and ferrous oxalate.

The phosphorus source may include one or more of ammonium phosphate, ammonium dihydrogen phosphate, diammonium hydrogen phosphate, and iron phosphate.

The solvent may be deionized water and/or ethanol.

The protective gas may include one or more of nitrogen, argon, and helium.

Further, a doping element M dopes into the lithium manganese iron phosphate particles, where the doping element M includes one or more of elements sulfur, nitrogen, boron, fluorine, chlorine, bromine, iodine, and the like, and optionally, the doping element M includes element sulfur. Specifically, the raw material including the doping element M may be added into the slurry, and the solution is ball-milled, dried, and then sintered at a high temperature under a protective gas into a lithium manganese iron phosphate material doped with the doping element.

The sulfur source may include one or more of thiourea, carbon disulfide, hydrogen sulfide, sulfur powder, and sodium dodecylbenzene sulfonate. The nitrogen source may include one or more of ammonium chloride, ammonium iodide, ammonium formate, ammonium acetate, hexamethylenetetramine, and glucosamine.

The boron source may include one or more of boron dioxide, diboron trioxide, boric acid, tetraphenylboric acid, boron carbide, and tributyl borate.

A molar ratio of element sulfur to element lithium is (0.01 to 0.05):1.

The lithium manganese iron phosphate particles may alternatively be prepared using a dry mixing method, and the specific preparation process may be existing processes in the field.

In some embodiments, in step S200, the conductive precursor may include one or more of nitrate, chloride salt, bromide salt, iodide salt, sulfate, phosphate, acetate, and acetylacetonate. To be specific, the conductive precursor is one or more of nitrate radical, chloride ions, bromide ions, iodide ions, sulfate radical, phosphate radical, acetate radical, and acetyl acetone radical.

The cations of the conductive precursor may include one or more of silver ions, gold ions, platinum ions, palladium ions, rhodium ions, iridium ions, osmium ions, and ruthenium ions.

For example, the conductive precursor is a reasonable combination of any one of the anions and any one of the cations described above. For example, the conductive precursor may be an inorganic precursor or an organic precursor, or may be silver nitrate, silver chloride, gold nitrate, or silver acetyl acetonate.

The conductive precursor is conducive to reduction in a reducing atmosphere. The nitrate radical can decompose and is not easily retained in the composite lithium manganese iron phosphate material. The chloride ions, bromide ions, and the like can form a hydrogen chloride or hydrogen bromide gas with hydrogen ions so as to be volatilized out of the system, are not easily retained in the composite lithium manganese iron phosphate material, and thus have less impact on the composite lithium manganese iron phosphate material.

In some embodiments, in step S200, based on a total molar ratio of the conductive precursor to the lithium manganese iron phosphate particles, a molar percentage of the conductive precursor is b%, where $0.25 \leq b \leq 14.5$, and optionally, $0.40 \leq b \leq 4.60$. The cations of the conductive precursor being silver ions is used as an example, $0.45 \leq b \leq 13.7$, and optionally, $0.70 \leq b \leq 4.20$.

In this application, the molar percentage of the conductive precursor is regulated such that the quality of the coating layer formed by the conductive precursor on the surface of the lithium manganese iron phosphate particles is regulated; the lithium manganese iron phosphate is the major material in the composite lithium manganese iron phosphate, and thus the coating layer has less effect on the overall gram capacity of the material, which guarantees the overall gram capacity of the material; and the coating layer can form a uniform coating on the lithium manganese iron phosphate, which improves the overall electrical conductivity of the composite manganese iron phosphate and is conducive to the capacity performance of the lithium manganese iron phosphate.

In some embodiments, in step S200, the heat treatment may be performed at a temperature of 400°C to 1000°C; and/or the heat treatment may be performed for 2h to 6h.

In this application, the conditions of the heat treatment are regulated such that the size of the metal nanoparticles formed can be controlled; the temperature of the heat treatment being not too high is conducive to the moderate growth of the metal nanoparticles, such that the metal nanoparticles are not too large and the doping element is prone to provide an anchoring effect, so as to cause the metal nanoparticles to be uniformly distributed on the surface of the lithium manganese iron phosphate particles; and the particles formed have a relatively moderate particle size, which is beneficial to forming a good coating effect on the lithium manganese iron phosphate particles. The temperature of the heat treatment is not too low, such that the metal ions in the conductive precursor can be fully reduced to metal elementary substances.

Correspondingly, regulating the time of the heat treatment can also obtain a similar effect. Specifically, sufficient heat treatment time can fully reduce the metal ions in the conductive precursor to the metal elementary substances, and can ensure that the metal elementary substances do not grow excessively, such that the particle size of the nanoparticles of the metal elementary substances is relatively small and can uniformly cover the surface of the lithium manganese iron phosphate particles.

In some embodiments, in step S200, the heat treatment may be performed under the protection of a reducing atmosphere, and the conductive precursor can be fully reduced to generate metal nanoparticles. For example, the reducing atmosphere may be a mixture of argon and hydrogen, and the proportion of hydrogen may be relatively small. For example, hydrogen has a proportion of 5%.

## Secondary battery

According to a third aspect, this application proposes a secondary battery.

The secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

[Positive electrode plate]

In some embodiments, the positive electrode plate includes a positive electrode current collector and a positive electrode film layer disposed on at least one surface of the positive electrode current collector. For example, the positive electrode current collector has two opposite surfaces in its thickness direction, and the positive electrode film layer is provided on either or both of the two opposite surfaces of the positive electrode current collector.

In some embodiments, the positive electrode film layer includes a positive electrode active material, and the positive electrode active material may include the composite lithium manganese iron material according to any one of the embodiments of the first aspect of this application, or a composite lithium manganese iron material prepared using the method according to any one of the embodiments of the second aspect of this application.

In some embodiments, the positive electrode film layer further optionally includes a positive electrode conductive agent. The positive electrode conductive agent is not limited to a particular type in this application. For example, the positive electrode conductive agent includes a combination of one or more selected from superconducting carbon, conductive graphite, acetylene black, carbon black, Ketjen black, carbon dots, carbon nanotubes, graphene, and carbon nanofiber. In some embodiments, based on a total mass of the positive electrode film layer, a mass percentage of the positive electrode conductive agent is below 5%.

In some embodiments, the positive electrode film layer further optionally includes a positive electrode binder. The positive electrode binder is not limited to a particular type in this application. For example, the positive electrode binder may include a combination of one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In some embodiments, based on a total mass of the positive electrode film layer, a mass percentage of the positive electrode binder is below 5%.

In some embodiments, the positive electrode current collector may be a metal foil current collector or a composite current collector. As examples of metal foils, aluminum foil or aluminum alloy foil may be used. The composite current collector may include a polymer material matrix and a metal material layer formed on at least one surface of the polymer material matrix. For example, the metal material may include a combination of one or more selected from aluminum, aluminum alloys, nickel, nickel alloys, titanium, titanium alloys, silver, and silver alloys, and the polymer material matrix may include a combination of one or more selected from polypropylene (PP), polyethylene terephthalate (PET), polybutylene terephthalate (PBT), polystyrene (PS), and polyethylene (PE).

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

[Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

[Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolyte is a liquid electrolyte. The liquid electrolyte includes an electrolytic salt and a solvent.

For example, the electrolyte lithium salt may include a combination of one or more selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluoro(dioxalato)phosphate (LiDFOP), and lithium tetrafluoro oxalato phosphate (LiTFOP).

For example, the organic solvent may include a combination of one or more selected from propene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), methyl ethyl sulfone (EMS), and diethyl sulfone (ESE).

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving hightemperature performance or low-temperature performance of the battery.

[Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

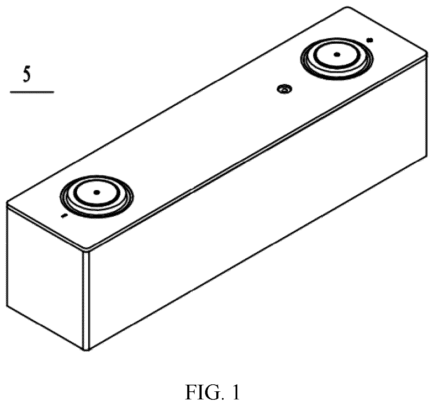

This application does not impose any special limitations on a shape of the secondary battery, and the secondary battery may be cylindrical, rectangular, or of any other shapes. FIG. 1 shows a rectangular secondary battery 5 as an example.

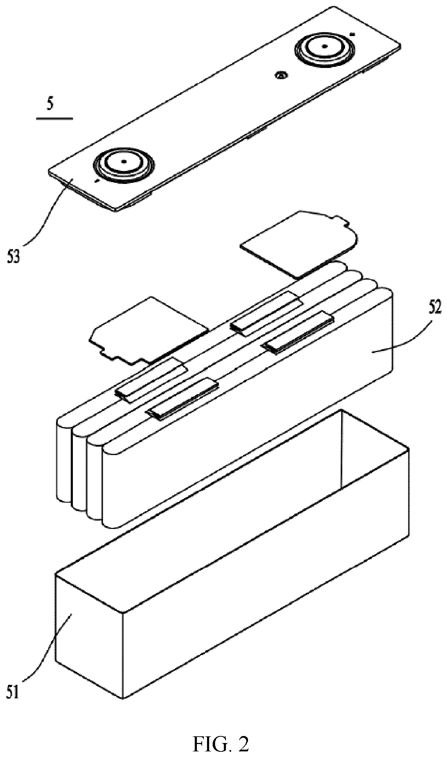

In some embodiments, as shown in FIG. 1 and FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 is configured to cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The secondary battery 5 may include one or more electrode assemblies 52 whose quantity is adjustable as required.

The preparation method of secondary battery of this application is well known. In some embodiments, the positive electrode plate, the separator, the negative electrode plate, and the electrolyte may be assembled to form a secondary battery. For example, the positive electrode plate, the separator, and the negative electrode plate may be made into an electrode assembly through winding or lamination; and the electrode assembly is put in an outer package which is filled with electrolyte after drying, followed by processes such as vacuum packaging, standing, formation, and shaping, to obtain a secondary battery.

In some embodiments of this application, such secondary batteries of this application may be assembled into a battery module. The battery module may include a plurality of secondary batteries whose quantity may be adjusted based on application and capacity of the battery module.

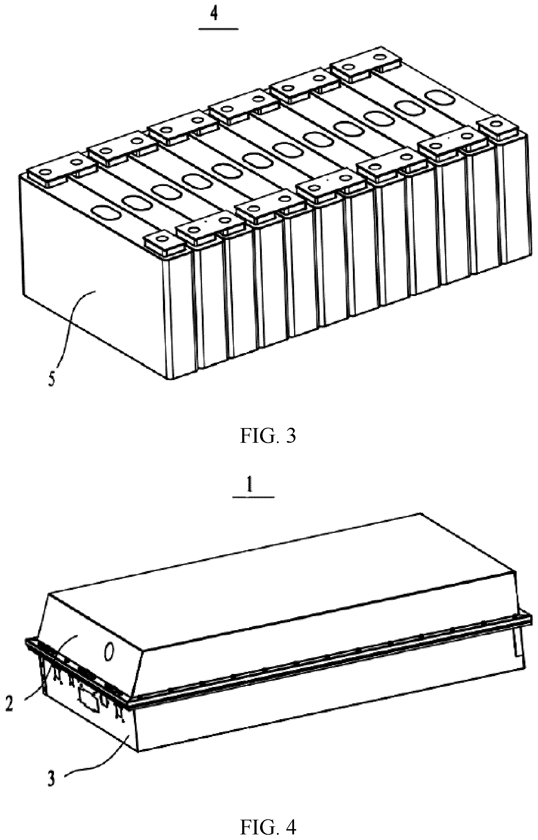

FIG. 3 is a schematic diagram of a battery module 4 as an example. As shown in FIG. 3, in the battery module 4, a plurality of secondary batteries 5 may be sequentially arranged along a length direction of the battery module 4. Certainly, the batteries may alternatively be arranged in any other manners. Further, the plurality of secondary batteries 5 may be fastened through fasteners.

Optionally, the battery module 4 may further include an enclosure with an accommodating space, and the plurality of secondary batteries 5 are accommodated in the accommodating space.

In some embodiments, the battery modules may be further assembled into a battery pack, and a quantity of battery modules included in the battery pack may be adjusted based on application and capacity of the battery pack.

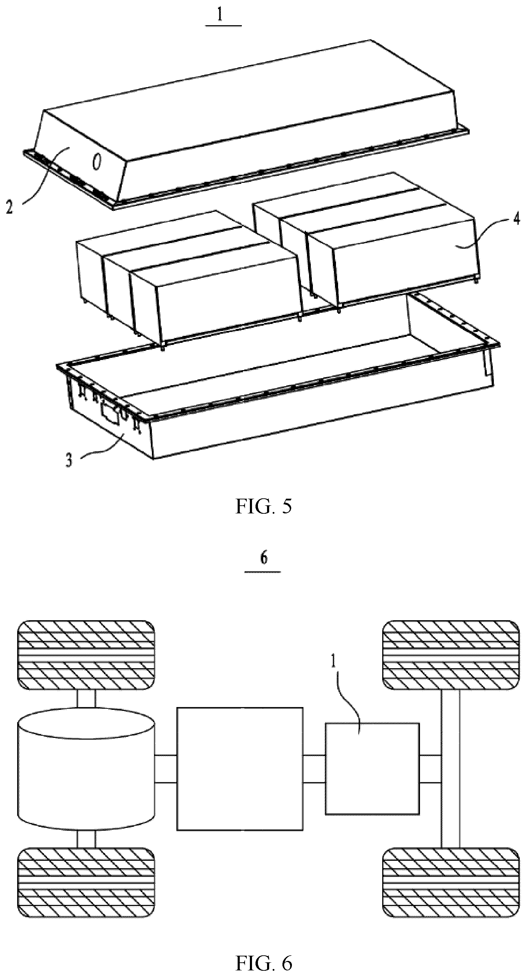

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to be engaged with the lower box body 3 to form an enclosed space for accommodating the battery modules 4. The plurality of battery modules 4 may be arranged in the battery box in any manner.

## Electric apparatus

According to a fourth aspect, this application provides an electric apparatus. The electric apparatus includes at least one of the secondary battery, the battery module, and the battery pack according to this application. The secondary battery, the battery module, or the battery pack may be used as a power source for the electric apparatus or an energy storage unit of the electric apparatus. The electric apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The secondary battery, the battery module, or the battery pack may be selected for the electric apparatus based on requirements for using the electric apparatus.

FIG. 6 is a schematic diagram of an electric apparatus as an example. This electric apparatus 6 is a battery electric vehicle, a hybrid electric vehicle, a plug-in hybrid electric vehicle, or the like. To satisfy requirements of the electric apparatus for high power and high energy density, a battery pack 1 or a battery module may be used.

In another example, the electric apparatus may be a mobile phone, a tablet computer, a notebook computer, or the like. Such electric apparatus is generally required to be light and thin and may use a secondary battery as its power source.

**Examples**

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

Example 1

1. Preparation of positive electrode plate

1 mol of a lithium source (for example, lithium hydroxide), 0.6 mol of a manganese source (for example, manganese carbonate), 0.4 mol of an iron source (for example, ferrous carbonate), and 1 mol of a phosphorus source (for example, ammonium phosphate) were added one by one to 35 mol of deionized water. The solution was stirred into uniformity to obtain a mixed slurry. 0.03 mol of sulfur source (for example, sulfur powder) was slowly added to the mixed slurry. The resulting slurry was ball-milled at a rotational speed of 600 per minute for 6 hours, then vacuum dried at 80°C for 12 hours, and calcined at a temperature of 800°C under a nitrogen atmosphere for 12 hours. The solid product obtained was ground and pulverized to obtain sulfur-doped lithium manganese iron phosphate particles.

The lithium manganese iron phosphate particles were used as a positive electrode active material, and the positive electrode active material and silver nitrate were mixed at a molar ratio of 1:0.027. The mixture was treated at 600°C for 4 h under the protection of a reducing atmosphere ($Ar/H_2$) to obtain a silver-coated lithium manganese iron phosphate material, that is, a composite lithium manganese iron phosphate material.

The composite lithium manganese iron phosphate material, a conductive agent carbon black, and a binder polyvinylidene fluoride (PVDF) were thoroughly mixed and stirred at a weight ratio of 97.5:1.4:1.1 in a proper amount of solvent NMP to form a uniform positive electrode slurry. The positive electrode slurry was evenly applied onto a surface of a positive electrode current collector aluminum foil (with a thickness of 12 $\mu$m), followed by drying and cold pressing, to obtain a positive electrode plate.

2. Preparation of negative electrode plate

Copper foil with a thickness of 8 $\mu$m was used as a negative electrode current collector.

A negative electrode active material graphite, a binder styrene-butadiene rubber (SBR), a thickener sodium carboxymethyl cellulose (CMC-Na), and a conductive agent carbon black (Super P) were thoroughly mixed and stirred in a proper amount of solvent deionized water at a mass ratio of 96.2:1.8: 1.2:0.8 to form a uniform negative electrode slurry. The negative electrode slurry was evenly applied onto a surface of the negative electrode current collector copper foil, followed by drying and cold pressing, to obtain a negative electrode plate.

3. Separator

A porous polyethylene (PE) film was used as a separator.

4. Preparation of electrolyte

In an environment with a water content of less than 10 ppm, non-aqueous organic solvents ethylene carbonate EC and diethyl carbonate DMC were mixed at a volume ratio of 1:1 to obtain an electrolyte solvent. A lithium salt and the mixed solvent were then mixed to prepare an electrolyte with a lithium salt concentration of 1 mol/L.

5. Preparation of secondary battery

The positive electrode plate, the separator, and the negative electrode plate were sequentially stack so that the separator was located between the positive electrode plate and negative electrode plate to provide separation. Then the resulting stack was wound to obtain an electrode assembly. The electrode assembly was placed into an outer package and dried, and the electrolyte was then injected. Processes such as vacuum packaging, standing, formation, and shaping were performed to obtain a lithium-ion battery.

Example 2

The secondary batteries of Examples 2-1 to 2-3 were prepared in the same method as in Example 1, except that the types of the conductive precursors were adjusted in Examples 2-1 to 2-3.

Example 3

The secondary batteries of Examples 3-1 to 3-8 were prepared in the same method as in Example 1, except that the molar amounts of the conductive precursor silver nitrate were adjusted in Examples 3-1 to 3-8.

Example 4

The secondary batteries of Examples 4-1 to 4-5 were prepared in the same method as in Example 1, except that the heat treatment conditions were adjusted in Examples 4-1 to 4-5.

Example 5

The secondary battery of Example 5 was prepared in the same method as in Example 1, except that the composite lithium manganese iron phosphate particles of Example 5 was not doped with element sulfur and was prepared as follows:
1 mol of a lithium source (for example, lithium hydroxide), 0.6 mol of a manganese source (for example, manganese carbonate), 0.4 mol of an iron source (for example, ferrous carbonate), and 1 mol of a phosphorus source (for example, ammonium phosphate) were added one by one to 35 mol of deionized water. The solution was stirred into uniformity to obtain a mixed slurry. The mixed slurry was ball-milled at a rotational speed of 600 per minute for 6 hours, then vacuum dried at 80°C for 12 hours, and calcined at a temperature of 800°C under a nitrogen atmosphere for 12 hours. The solid product obtained was ground and pulverized to obtain lithium manganese iron phosphate particles.
The lithium manganese iron phosphate particles and silver nitrate were mixed at a molar ratio of 1:0.027. The mixture was treated at 600°C for 4 h under the protection of a reducing atmosphere ($Ar/H_2$) to obtain the silver-coated lithium manganese iron phosphate material, that is, the composite lithium manganese iron phosphate material.

Comparative Example 1

The secondary battery of Comparative Example 1 was prepared in the same method as in Example 1, except that the composite lithium manganese iron phosphate particles of Comparative Example 1 were not coated with a coating layer.

Comparative Example 2

The secondary battery of Comparative Example 2 was prepared in the same method as in Example 1, except that the composite lithium manganese iron phosphate particles of Comparative Example 2 had a carbon coating layer and were specifically prepared as follows:
1 mol of a lithium source (for example, lithium hydroxide), 0.6 mol of a manganese source (for example, manganese carbonate), 0.4 mol of an iron source (for example, ferrous carbonate), and 1 mol of a phosphorus source (for example, ammonium phosphate) were added one by one to 35 mol of deionized water. The solution was stirred into uniformity to obtain a mixed slurry. The mixed slurry was ball-milled at a rotational speed of 600 per minute for 6 hours, then vacuum dried at 80°C for 12 hours, and calcined at a temperature of 800°C under a nitrogen atmosphere for 12 hours. The solid product obtained was ground and pulverized to obtain lithium manganese iron phosphate particles.
The lithium manganese iron phosphate particles and glucose were mixed at a molar ratio of 1:0.1. The mixture was treated at 600°C for 4 h under the protection of a reducing atmosphere ($Ar/H_2$) to obtain the carbon-coated lithium manganese iron phosphate material, that is, the composite lithium manganese iron phosphate material.
Related parameters of examples and comparative examples are shown in Table 1.

**Table 1**

| Item | Metal nanoparticles | Conductive precursor | Mass percentage of coating layer (A%) | Heat treatment temperature (°C) | Heat treatment time (h) | Particle size D of coating layer (nm) | Thickness H of coating layer (nm) | V1 (V) | V2 (V) | Gram capacity performance (mAh/g) | Cycles corresponding to cycling capacity decay to 80% SOH (cls) |
|---|---|---|---|---|---|---|---|---|---|---|---|
| Example 1 | Silver | Silver nitrate | 1.8 | 600 | 4 | 6.5 | 17.1 | 4.2 | >4.7 | 149 | 2070 |
| Example 2-1 | Silver | Silver chloride | 1.8 | 600 | 4 | 7.2 | 17.9 | 4.2 | >4.7 | 149 | 2030 |
| Example 2-2 | Gold | Chloroauric acid | 1.2 | 600 | 4 | 4.1 | 9.2 | 4.2 | >4.7 | 150 | 2050 |
| Example 2-3 | Platinum | Chloroplatinic acid | 0.8 | 600 | 4 | 1.8 | 6.3 | 4.2 | >4.7 | 151 | 2010 |
| Example 3-1 | Silver | Silver nitrate | 0.8 | 600 | 4 | 4.5 | 10.6 | 4.2 | >4.7 | 151 | 1950 |
| Example 3-2 | Silver | Silver nitrate | 0.3 | 600 | 4 | 2.1 | 3.2 | 4.2 | >4.7 | 151 | 1080 |
| Example 3-3 | Silver | Silver nitrate | 0.5 | 600 | 4 | 2.9 | 6.3 | 4.2 | >4.7 | 151 | 1870 |
| Example 3-4 | Silver | Silver nitrate | 3.0 | 600 | 4 | 7.3 | 18.2 | 4.2 | >4.7 | 147 | 2020 |
| Example 3-5 | Silver | Silver nitrate | 5.0 | 600 | 4 | 8.4 | 20.1 | 4.2 | >4.7 | 144 | 1970 |
| Example 3-6 | Silver | Silver nitrate | 10.0 | 600 | 4 | 9.8 | 29.3 | 4.2 | >4.7 | 137 | 1680 |
| Example 3-7 | Silver | Silver nitrate | 12.0 | 600 | 4 | 11.3 | 32.6 | 4.2 | >4.7 | 134 | 1560 |
| Example 3-8 | Silver | Silver nitrate | 0.1 | 600 | 4 | 1.5 | 2.1 | 4.2 | >4.7 | 152 | 730 |
| Example 4-1 | Silver | Silver nitrate | 1.8 | 800 | 4 | 7.3 | 17.6 | 4.2 | >4.7 | 149 | 1970 |
| Example 4-2 | Silver | Silver nitrate | 1.8 | 1000 | 4 | 7.8 | 18.3 | 4.2 | >4.7 | 149 | 1930 |
| Example 4-3 | Silver | Silver nitrate | 1.8 | 400 | 4 | 3.3 | 16.4 | 4.2 | >4.7 | 149 | 2040 |
| Example 4-4 | Silver | Silver nitrate | 1.8 | 600 | 6 | 7.6 | 17.8 | 4.2 | >4.7 | 149 | 1950 |
| Example 4-5 | Silver | Silver nitrate | 1.8 | 600 | 2 | 5.2 | 16.7 | 4.2 | >4.7 | 149 | 2010 |
| Example 5 | Silver | Silver nitrate | 1.8 | 600 | 4 | 30.8 | 42.7 | 4.2 | >4.7 | 147 | 1320 |
| Comparative Example 1 | / | / | / | / | / | / | / | 4.2 | / | 152 | 420 |
| Comparative Example 2 | / | / | / | / | / | / | / | 4.2 | <4 | 151 | 1200 |

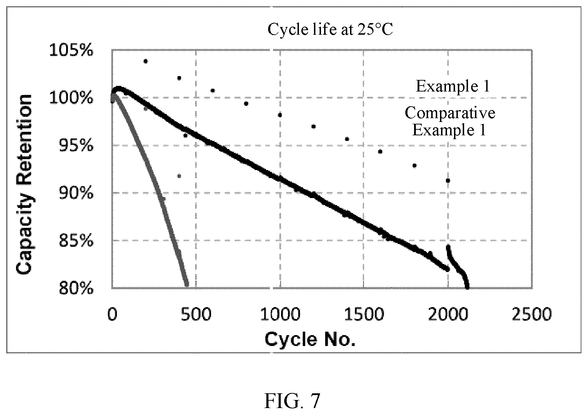

It can be seen from Table 1 that the lithium manganese iron phosphate particles of Comparative Example 1 are not coated with the coating layer and have an unstable structure during long-term cyclic charge and discharge. As compared with Comparative Example 1, in Comparative Example 2, a carbon-containing coating layer is provided on the surface of the lithium manganese iron phosphate particles, which has a good protective effect on the lithium manganese iron phosphate particles and can improve the cycling performance of the secondary batteries. However, carbon may be oxidized in a high-voltage system, which leads to the degradation of the cycling performance of the system thereof. FIG. 7 shows the cycling curves of Comparative Example 1 and Example 1. In the embodiments of this application, because the coating layer containing metal nanoparticles is provided, the performance of the coating layer is relatively stable, the cycling performance of the system can be significantly improved, and the capacity performance of the lithium manganese iron phosphate can be guaranteed.

As compared with Comparative Example 1, in Examples 3-1 to 3-8, the mass percentage of the coating layer is regulated, which can improve the cycling performance of the secondary battery. Although the mass percentage of the coating layer in Example 3-8 is lower and the content of silver in the coating layer is less, Example 3-8 still shows the effect of improving the cycling performance compared with Comparative Example 1.

The coating layer of Comparative Example 2 has the effect of improving the cycling performance when coating of carbon is sufficient. Because the oxidizing effect of carbon weakens its ability to protect lithium manganese iron phosphate particles, the cycling performance is deteriorated to a certain extent. As compared with Comparative Example 2, in some embodiments of Examples 3-1 to 3-8, when the mass percentage of the coating layer is similar to the carbon coating amount in Comparative Example 2, the coating effect and cycling performance can be significantly improved in Examples 3-1 to 3-8.

As compared with Example 5, in Example 1, the lithium manganese iron phosphate particles were doped with element sulfur, which can provide an anchoring effect on the metal nanoparticles, improve the coating uniformity of the metal nanoparticles, and improve the cycling performance of the system.

Test part:

1. Gram capacity of positive electrode active material

The positive electrode active material prepared above, a conductive agent carbon black, and a binder polyvinylidene fluoride (PVDF) were mixed at a mass ratio of 91.6: 1.8:6.6 in a solvent N-methylpyrrolidone (NMP) to prepare a slurry. The prepared slurry was applied on a copper foil and dried in an oven for later use. A lithium metal plate was used as a counter electrode, a polyethylene (PE) film was used as a separator, and several drops of the same electrolyte as the foregoing secondary battery were dropped. These materials were assembled in argon-protected glove boxes as a button battery of model CR2430.

After left standing for 12 hours, the obtained button battery was discharged to 0.005 V at a constant current of 0.05C at 25°C and left standing for 10 min; discharged to 0.005 V at a constant current of 50 $\mu$A and left standing for 10 min; discharged to 0.005 V at a constant current of 10 $\mu$A; and then charged to 2 V at a constant current of 0.1C. At this point, a charge capacity was recorded. A ratio of the charging capacity to mass of the negative electrode active material is the initial gram capacity of the negative electrode active material.

2. Cycling performance of secondary battery

At 25°C, the secondary battery prepared above was charged to a charge cut-off voltage of 4.4 V at a constant current of 0.33C, then charged to a current of 0.05C at a constant voltage, left standing for 5 min, and then discharged to a discharge cut-off voltage of 2.8 V at a constant current of 0.33C. An initial capacity of the battery was recorded as C0. Then the battery was charged according to the strategy in Table 2, and discharged at 0.33C. A discharge capacity Cn at each cycle was recorded until a cycling capacity retention (that is, Cn/C0× 100%) was 80%, and the number of cycles was recorded. More cycles indicate better cycling performance of the secondary battery.

**Table 2**

| State of charge SOC of secondary battery | Charge rate (C) |
|---|---|
| 0-10% | 0.33 |
| 10%-20% | 5.2 |
| 20%-30% | 4.5 |
| 30%-40% | 4.2 |

(continued)

| State of charge SOC of secondary battery | Charge rate (C) |
|---|---|
| 40%-50% | 3.3 |
| 50%-60% | 2.6 |
| 60%-70% | 2.0 |
| 70%-80% | 1.5 |
| 80%-100% | 0.33 |

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1.   A composite lithium manganese iron phosphate material, comprising:

   lithium manganese iron phosphate particles, wherein an upper service voltage of the lithium manganese iron phosphate particles is denoted as V1 in V, wherein the upper service voltage V1 of the lithium manganese iron phosphate is an preset upper limit charge voltage of the lithium manganese iron phosphate when the lithium manganese iron phosphate is applied as a positive electrode active material to a secondary battery; and
   a coating layer covering at least partial surface of the lithium manganese iron phosphate particles, wherein the coating layer comprises metal nanoparticles, and an oxidation voltage of the metal nanoparticles is denoted as V2 in V; wherein the oxidation voltage V2 of the metal nanoparticles is a voltage at which the metal nanoparticles lose their electrons and become metal ions, as measured according to the description;
   wherein the composite lithium manganese iron phosphate material satisfies V1<V2.

2.   The composite lithium manganese iron phosphate material according to claim 1, wherein

   the lithium manganese iron phosphate particles have a structural formula of $LiMn_{1-x}Fe_xM_yPO_4$, wherein

$$0.05 \leq x \leq 0.95;$$

   $0 \leq y \leq 1$, and optionally, $0 \leq y \leq 0.2$; and
   M denotes a doping element, and the doping element M comprises one or more of elements sulfur, nitrogen, boron, fluorine, chlorine, bromine, and iodine, and optionally, the doping element M comprises element sulfur.

3.   The composite lithium manganese iron phosphate material according to claim 1 or 2, wherein the metal nanoparticles comprise nanoparticles of one or more of silver, gold, platinum, palladium, rhodium, iridium, osmium, and ruthenium.

4.   The composite lithium manganese iron phosphate material according to any one of claims 1 to 3, wherein based on a total mass of the composite lithium manganese iron phosphate material, a mass percentage of the coating layer is denoted as A%, wherein $0.3 \leq A \leq 10$, and
   optionally, $0.3 \leq A \leq 3$.

5.   The composite lithium manganese iron phosphate material according to any one of claims 1 to 4, wherein thickness of the coating layer is denoted as H in nm, wherein $2 \leq H \leq 100$, and optionally, $5 \leq H \leq 20$.

6.   The composite lithium manganese iron phosphate material according to any one of claims 1 to 5, wherein the composite lithium manganese iron phosphate material satisfies at least one of conditions (1) to (3):

   (1) an average particle size D of the metal nanoparticles as measured according to the description is denoted as D1 in nm, wherein D1≤20, and optionally, D1≤10;

(2) a median particle size by volume $D_v50$ of the lithium manganese iron phosphate particles as measured according to the description is denoted as D2 in $\mu$m, wherein 0.1≤D2≤10, and optionally, 0.2≤D2≤5; and

(3) a median particle size by volume $D_v50$ of the composite lithium manganese iron phosphate material as measured according to the description is denoted as D in $\mu$m, wherein 0.1≤D≤10, and optionally, 0.2≤D≤5.

7. A preparation method of the composite lithium manganese iron phosphate material according to any one of claims 1 to 6, comprising:

providing lithium manganese iron phosphate particles; and

providing a conductive precursor to the lithium manganese iron phosphate particles, and performing heat treatment on the conductive precursor to reduce the conductive precursor to form a coating layer covering the lithium manganese iron phosphate particles, wherein the coating layer comprises metal nanoparticles; wherein

an upper service voltage of the lithium manganese iron phosphate particles is denoted as V1 in V; wherein the upper service voltage V1 of the lithium manganese iron phosphate is an preset upper limit charge voltage of the lithium manganese iron phosphate when the lithium manganese iron phosphate is applied as a positive electrode active material to a secondary battery;

the coating layer covers at least partial surface of the lithium manganese iron phosphate particles, the coating layer comprises metal nanoparticles, and an oxidation voltage of the metal nanoparticles is denoted as V2 in V; wherein the oxidation voltage V2 of the metal nanoparticles is a voltage at which the metal nanoparticles lose their electrons and become metal ions, as measured according to the description; and

the composite lithium manganese iron phosphate material satisfies V1<V2.

8. The method according to claim 7, wherein the step of providing lithium manganese iron phosphate particles comprises:

doping a doping element M into the lithium manganese iron phosphate particles, wherein the doping element M comprises one or more of elements sulfur, nitrogen, boron, fluorine, chlorine, bromine, and iodine, and optionally, the doping element M comprises element sulfur.

9. The method according to claim 7 or 8, wherein

the heat treatment is performed at a temperature of 400°C to 1000°C; and/or

the heat treatment is performed for 2h to 6h.

10. The method according to any one of claims 7 to 9, wherein

the conductive precursor comprises one or more of nitrate radical, chloride ions, bromide ions, iodide ions, sulfate radical, phosphate radical, acetate radical, and acetyl acetone radical; and/or

the conductive precursor comprises one or more of silver ions, gold ions, platinum ions, palladium ions, rhodium ions, iridium ions, osmium ions, and ruthenium ions.

11. The method according to any one of claims 7 to 10, wherein based on a total molar ratio of the conductive precursor to the lithium manganese iron phosphate particles, a molar percentage of the conductive precursor is b%, wherein 0.25≤b≤14.5, and optionally, 0.40≤b≤4.60.

12. A secondary battery (5), comprising a positive electrode plate, wherein the positive electrode plate comprises the composite lithium manganese iron phosphate material according to any one of claims 1 to 6 or a composite lithium manganese iron phosphate material prepared using the method according to any one of claims 1 to 11.

13. An electric apparatus (6), comprising the secondary battery (5) according to claim 12.

**Patentansprüche**

1. Verbundmaterial aus Lithium-Mangan-Eisen-Phosphat, umfassend:

Lithium-Mangan-Eisen-Phosphat-Partikel, wobei eine obere Betriebsspannung der Lithium-Mangan-Eisen-Phosphat-Partikel mit V1 in V bezeichnet wird, wobei die obere Betriebsspannung V1 des Lithium-Mangan-Eisen-Phosphats eine voreingestellte obere Grenz-Ladespannung des Lithium-Mangan-Eisen-Phosphats ist, wenn das Lithium-Mangan-Eisen-Phosphat als positives Elektrodenaktivmaterial in einer Sekundärbatterie verwendet wird; und

eine Beschichtungsschicht, die mindestens einen Teil der Oberfläche der Lithium-Mangan-Eisen-Phosphat-Partikel bedeckt, wobei die Beschichtungsschicht Metallnanopartikel umfasst und eine Oxidationsspannung der Metallnanopartikel mit V2 in V bezeichnet wird; wobei die Oxidationsspannung V2 der Metallnanopartikel eine Spannung ist, bei der die Metallnanopartikel ihre Elektronen verlieren und zu Metallionen werden, gemessen gemäß der Beschreibung;

wobei das Verbundmaterial aus Lithium-Mangan-Eisen-Phosphat V1 < V2 erfüllt.

2. Verbundmaterial aus Lithium-Mangan-Eisen-Phosphat nach Anspruch 1, wobei

die Lithium-Mangan-Eisen-Phosphat-Partikel eine Strukturformel von $LiM_{n1-x}Fe_xM_yPO_4$ aufweisen, wobei

$$0{,}05 \leq x \leq 0{,}95;$$

$0 \leq y \leq 1$, und optional $0 \leq y \leq 0{,}2$; und

M ein Dotierungselement bezeichnet, und das Dotierungselement M eines oder mehrere der Elemente Schwefel, Stickstoff, Bor, Fluor, Chlor, Brom und Iod umfasst, und optional umfasst das Dotierungselement M das Element Schwefel.

3. Verbundmaterial aus Lithium-Mangan-Eisen-Phosphat nach Anspruch 1 oder 2, wobei die Metallnanopartikel Nanopartikel aus einem oder mehreren von Silber, Gold, Platin, Palladium, Rhodium, Iridium, Osmium und Ruthenium umfassen.

4. Verbundmaterial aus Lithium-Mangan-Eisen-Phosphat nach einem der Ansprüche 1 bis 3, wobei bezogen auf eine Gesamtmasse des Verbundmaterials aus Lithium-Mangan-Eisen-Phosphat ein Massenprozentsatz der Beschichtungsschicht mit A % bezeichnet wird, wobei $0{,}3 \leq A \leq 10$, und optional $0{,}3 \leq A \leq 3$.

5. Verbundmaterial aus Lithium-Mangan-Eisen-Phosphat nach einem der Ansprüche 1 bis 4, wobei eine Dicke der Beschichtungsschicht mit H in nm bezeichnet wird, wobei $2 \leq H \leq 100$, und optional $5 \leq H \leq 20$.

6. Verbundmaterial aus Lithium-Mangan-Eisen-Phosphat nach einem der Ansprüche 1 bis 5, wobei das Verbundmaterial aus Lithium-Mangan-Eisen-Phosphat mindestens eine der Bedingungen (1) bis (3) erfüllt:

(1) eine durchschnittliche Partikelgröße D der Metallnanopartikel, gemessen gemäß der Beschreibung, wird mit D1 in nm bezeichnet, wobei $D1 \leq 20$, und optional $D1 \leq 10$;

(2) eine volumetrische mittlere Partikelgröße $D_v50$ der Lithium-Mangan-Eisen-Phosphat-Partikel, gemessen gemäß der Beschreibung, wird mit D2 in $\mu m$ bezeichnet, wobei $0{,}1 \leq D2 \leq 10$, und optional $0{,}2 \leq D2 \leq 5$; und

(3) eine volumetrische mittlere Partikelgröße Dv50 des Verbundmaterials aus Lithium-Mangan-Eisen-Phosphat, gemessen gemäß der Beschreibung, wird mit D in $\mu m$ bezeichnet, wobei $0{,}1 \leq D \leq 10$, und optional $0{,}2 \leq D \leq 5$.

7. Herstellungsverfahren des Verbundmaterials aus Lithium-Mangan-Eisen-Phosphat nach einem der Ansprüche 1 bis 6, umfassend:

Bereitstellen von Lithium-Mangan-Eisen-Phosphat-Partikeln; und

Bereitstellen eines leitfähigen Vorläufers zu den Lithium-Mangan-Eisen-Phosphat-Partikeln und Durchführen einer Wärmebehandlung des leitfähigen Vorläufers, um den leitfähigen Vorläufer zu reduzieren und eine die Lithium-Mangan-Eisen-Phosphat-Partikel bedeckende Beschichtungsschicht zu bilden, wobei die Beschichtungsschicht Metallnanopartikel umfasst;

wobei

eine obere Betriebsspannung der Lithium-Mangan-Eisen-Phosphat-Partikel mit V1 in V bezeichnet wird; wobei die obere Betriebsspannung V1 des Lithium-Mangan-Eisen-Phosphats eine voreingestellte obere Grenz-Ladespannung des Lithium-Mangan-Eisen-Phosphats ist, wenn das Lithium-Mangan-Eisen-Phosphat als positives Elektrodenaktivmaterial in einer Sekundärbatterie verwendet wird;

die Beschichtungsschicht mindestens einen Teil der Oberfläche der Lithium-Mangan-Eisen-Phosphat-Partikel bedeckt, die Beschichtungsschicht Metallnanopartikel umfasst, und eine Oxidationsspannung der Metallnanopartikel mit V2 in V bezeichnet wird; wobei die Oxidationsspannung V2 der Metallnanopartikel eine Spannung ist, bei der die Metallnanopartikel ihre Elektronen verlieren und zu Metallionen werden, gemessen gemäß der Beschreibung; und

das Verbundmaterial aus Lithium-Mangan-Eisen-Phosphat V1 < V2 erfüllt.

8. Verfahren nach Anspruch 7, wobei der Schritt des Bereitstellens von Lithium-Mangan-Eisen-Phosphat-Partikeln umfasst:

Dotieren eines Dotierungselements M in die Lithium-Mangan-Eisen-Phosphat-Partikel, wobei das Dotierungselement M eines oder mehrere der Elemente Schwefel, Stickstoff, Bor, Fluor, Chlor, Brom und Iod umfasst, und optional umfasst das Dotierungselement M das Element Schwefel.

9. Verfahren nach Anspruch 7 oder 8, wobei
die Wärmebehandlung bei einer Temperatur von 400 °C bis 1000 °C durchgeführt wird; und/oder die Wärmebehandlung für 2 h bis 6 h durchgeführt wird.

10. Verfahren nach einem der Ansprüche 7 bis 9, wobei

der leitfähige Vorläufer ein oder mehrere von Nitrat-Radikal, Chloridionen, Bromidionen, Iodidionen, Sulfat-Radikal, Phosphat-Radikal, Acetat-Radikal und Acetylaceton-Radikal umfasst; und/oder
der leitfähige Vorläufer ein oder mehrere von Silberionen, Goldionen, Platinionen, Palladiumionen, Rhodiumionen, Iridiumionen, Osmiumionen und Rutheniumionen umfasst.

11. Verfahren nach einem der Ansprüche 7 bis 10, wobei bezogen auf ein Gesamt-Molverhältnis des leitfähigen Vorläufers zu den Lithium-Mangan-Eisen-Phosphat-Partikeln ein Molprozentsatz des leitfähigen Vorläufers b % ist, wobei $0,25 \leq b \leq 14,5$, und optional $0,40 \leq b \leq 4,60$.

12. Sekundärbatterie (5), umfassend eine positive Elektrodenplatte, wobei die positive Elektrodenplatte das Verbundmaterial aus Lithium-Mangan-Eisen-Phosphat nach einem der Ansprüche 1 bis 6 oder ein unter Verwendung des Verfahrens nach einem der Ansprüche 1 bis 11 hergestelltes Verbundmaterial aus Lithium-Mangan-Eisen-Phosphat umfasst.

13. Elektrisches Gerät (6), umfassend die Sekundärbatterie (5) nach Anspruch 12.

**Revendications**

1. Matériau composite de phosphate de lithium-manganèse-fer, comprenant :

des particules de phosphate de lithium-manganèse-fer, dans lequel une tension de service supérieure des particules de phosphate de lithium-manganèse-fer est désignée par V1 en V, dans lequel la tension de service supérieure V1 du phosphate de lithium-manganèse-fer est une tension de charge limite supérieure prédéfinie du phosphate de lithium-manganèse-fer lorsque le phosphate de lithium-manganèse-fer est appliqué en tant que matériau actif d'électrode positive à une batterie secondaire ; et
une couche de revêtement recouvrant au moins une partie de la surface des particules de phosphate de lithium-manganèse-fer, dans lequel la couche de revêtement comprend des nanoparticules métalliques, et une tension d'oxydation des nanoparticules métalliques est désignée par V2 en V ; dans lequel la tension d'oxydation V2 des nanoparticules métalliques est une tension à laquelle les nanoparticules métalliques perdent leurs électrons et deviennent des ions métalliques, telle que mesurée conformément à la description ;
dans lequel le matériau composite de phosphate de lithium-manganèse-fer satisfait à V1 < V2.

2. Matériau composite de phosphate de lithium-manganèse-fer selon la revendication 1, dans lequel

les particules de phosphate de lithium-manganèse-fer ont une formule structurelle $LiM_{n1-x}Fe_xM_yPO_4$, dans laquelle

$$0{,}05 \le x \le 0{,}95 \; ;$$

$0 \le y \le 1$, et, éventuellement, $0 \le y \le 0{,}2$ ; et

M désigne un élément dopant, et l'élément dopant M comprend un ou plusieurs des éléments soufre, azote, bore, fluor, chlore, brome et iode, et, éventuellement, l'élément dopant M comprend l'élément soufre.

3. Matériau composite de phosphate de lithium-manganèse-fer selon la revendication 1 ou 2, dans lequel les nanoparticules métalliques comprennent des nanoparticules d'un ou plusieurs parmi l'argent, l'or, le platine, le palladium, le rhodium, l'iridium, l'osmium et le ruthénium.

4. Matériau composite de phosphate de lithium-manganèse-fer selon l'une quelconque des revendications 1 à 3, dans lequel, sur la base d'une masse totale du matériau composite de phosphate de lithium-manganèse-fer, un pourcentage massique de la couche de revêtement est désigné par A %, dans lequel $0{,}3 \le A \le 10$, et éventuellement, $0{,}3 \le A \le 3$.

5. Matériau composite de phosphate de lithium-manganèse-fer selon l'une quelconque des revendications 1 à 4, dans lequel
une épaisseur de la couche de revêtement est désignée par H en nm, dans lequel $2 \le H \le 100$, et, éventuellement, $5 \le H \le 20$.

6. Matériau composite de phosphate de lithium-manganèse-fer selon l'une quelconque des revendications 1 à 5, dans lequel le matériau composite de phosphate de lithium-manganèse-fer satisfait à au moins une des conditions (1) à (3) :

   (1) une taille moyenne de particule D des nanoparticules métalliques telle que mesurée conformément à la description est désignée par D1 en nm, dans lequel $D1 \le 20$, et, éventuellement, $D1 \le 10$ ;
   (2) une taille médiane volumique de particule $D_v50$ des particules de phosphate de lithium-manganèse-fer telle que mesurée conformément à la description est désignée par D2 en $\mu$m, dans lequel $0{,}1 \le D2 \le 10$, et, éventuellement, $0{,}2 \le D2 \le 5$ ; et
   (3) une taille médiane volumique de particule Dv50 du matériau composite de phosphate de lithium-manganèse-fer telle que mesurée conformément à la description est désignée par D en $\mu$m, dans lequel $0{,}1 \le D \le 10$, et, éventuellement, $0{,}2 \le D \le 5$.

7. Procédé de préparation du matériau composite de phosphate de lithium-manganèse-fer selon l'une quelconque des revendications 1 à 6, comprenant :

   la fourniture de particules de phosphate de lithium-manganèse-fer ; et
   la fourniture d'un précurseur conducteur aux particules de phosphate de lithium-manganèse-fer, et la réalisation d'un traitement thermique sur le précurseur conducteur afin de réduire le précurseur conducteur pour former une couche de revêtement recouvrant les particules de phosphate de lithium-manganèse-fer, dans lequel la couche de revêtement comprend des nanoparticules métalliques ;
   dans lequel
   une tension de service supérieure des particules de phosphate de lithium-manganèse-fer est désignée par V1 en V ; dans lequel la tension de service supérieure V1 du phosphate de lithium-manganèse-fer est une tension de charge limite supérieure prédéfinie du phosphate de lithium-manganèse-fer lorsque le phosphate de lithium-manganèse-fer est appliqué en tant que matériau actif d'électrode positive à une batterie secondaire ;
   la couche de revêtement recouvre au moins une partie de la surface des particules de phosphate de lithium-manganèse-fer, la couche de revêtement comprend des nanoparticules métalliques, et une tension d'oxydation des nanoparticules métalliques est désignée par V2 en V ; dans lequel la tension d'oxydation V2 des nanoparticules métalliques est une tension à laquelle les nanoparticules métalliques perdent leurs électrons et deviennent des ions métalliques, telle que mesurée conformément à la description ; et
   le matériau composite de phosphate de lithium-manganèse-fer satisfait à V1 < V2.

8. Procédé selon la revendication 7, dans lequel l'étape de fourniture de particules de phosphate de lithium-manganèse-fer comprend :

   le dopage d'un élément dopant M dans les particules de phosphate de lithium-manganèse-fer, dans lequel l'élément dopant M comprend un ou plusieurs des éléments soufre, azote, bore, fluor, chlore, brome et iode, et éventuellement, l'élément dopant M comprend l'élément soufre.

9. Procédé selon la revendication 7 ou 8, dans lequel
le traitement thermique est réalisé à une température de 400 °C à 1000 °C ; et/ou le traitement thermique est réalisé pendant 2 h à 6 h.

10. Procédé selon l'une quelconque des revendications 7 à 9, dans lequel

le précurseur conducteur comprend un ou plusieurs parmi radical nitrate, ions chlorure, ions bromure, ions iodure, radical sulfate, radical phosphate, radical acétate et radical acétylacétone ; et/ou
le précurseur conducteur comprend un ou plusieurs parmi ions argent, ions or, ions platine, ions palladium, ions rhodium, ions iridium, ions osmium et ions ruthénium.

11. Procédé selon l'une quelconque des revendications 7 à 10, dans lequel, sur la base d'un rapport molaire total du précurseur conducteur aux particules de phosphate de lithium-manganèse-fer, un pourcentage molaire du précurseur conducteur est b %, dans lequel $0,25 \leq b \leq 14,5$, et, éventuellement, $0,40 \leq b \leq 4,60$.

12. Batterie secondaire (5), comprenant une plaque d'électrode positive, dans laquelle la plaque d'électrode positive comprend le matériau composite de phosphate de lithium-manganèse-fer selon l'une quelconque des revendications 1 à 6 ou un matériau composite de phosphate de lithium-manganèse-fer préparé en utilisant le procédé selon l'une quelconque des revendications 1 à 11.

13. Appareil électrique (6), comprenant la batterie secondaire (5) selon la revendication 12.

5

FIG. 1

FIG. 2

4

FIG. 3

1

FIG. 4

FIG. 5

FIG. 6

FIG. 7

**EP 4 492 497 B1**

**REFERENCES CITED IN THE DESCRIPTION**

**Patent documents cited in the description**

- CN 114772572 A
- US 8449980 B2
- US 2021376375 A1